# FASCICULE DE BREVET EUROPEEN

(11) **EP 3 894 468 B1**
(45) Date de publication et mention de la délivrance du brevet: **27.07.2022**
(21) Numéro de dépôt: 19816699.3
(22) Date de dépôt: 09.12.2019
(51) Int. Cl.: C08K 5/092, C09D 195/00, E01C 7/18, E04B 1/66

(54) **BITUME SOLIDE A TEMPERATURE AMBIANTE**
BEI RAUMTEMPERATUR FESTES BITUMEN
BITUMEN WHICH IS SOLID AT AMBIENT TEMPERATURE

(30) Priorité: 12.12.2018 FR 1872746
(43) Date de publication de la demande: 20.10.2021
(73) Titulaire: TotalEnergies OneTech, 92400 Courbevoie (FR)
(72) Inventeur: VINCENT, Régis, 69520 GRIGNY (FR); COLLIAT, Romain, 38300 RUY-MONTCEAU (FR)
(74) Mandataire: Corizzi, Valérie
(86) Numéro de dépôt international: PCT/EP2019/084259
(87) Numéro de publication internationale: WO 2020/120407

(56) Documents cités:
- WO-A1-2016/016318
- FR-A1- 3 059 674

## Description

### Domaine technique

La présente invention concerne une composition bitumineuse, solide à température ambiante, notamment à température ambiante élevée. Cette composition est avantageusement conditionnée sous forme divisée, notamment sous la forme de pains de liant. La présente invention concerne également un procédé de préparation de cette composition ainsi que son utilisation comme liant routier et/ou dans diverses applications industrielles. La présente invention concerne enfin un procédé de transport et/ou de stockage et/ou de manipulation de cette composition sous forme solide et divisée à température ambiante, notamment à température ambiante élevée.

### Etat de la technique antérieure

Le bitume ou liant bitumeux est le principal liant hydrocarboné utilisé dans les domaines de la construction routière et du génie civil. Pour pouvoir être utilisé comme liant dans ces différentes applications, le bitume doit présenter certaines propriétés physico-chimiques et mécaniques. Il doit notamment être suffisamment dur et avoir une bonne consistance aux températures d'usage pour éviter par exemple la formation d'ornières provoquées par le trafic. Le bitume doit aussi être élastique pour résister aux déformations imposées par le trafic et/ou les changements de température, ces phénomènes conduisant à la fissuration des enrobés et/ou à l'arrachement des granulats superficiels. Enfin, le bitume doit être suffisamment fluide à des températures d'application les moins élevées possibles pour permettre, par exemple, un bon enrobage des granulats et la mise en place de l'enrobé sur la route. La mise en œuvre d'un liant bitumineux nécessite donc de conjuguer à la fois la dureté, la consistance, voire aussi l'élasticité du bitume aux températures d'usage et une faible viscosité aux températures de mise en œuvre et d'application.

Le bitume seul n'étant en général pas assez élastique, on ajoute au bitume des polymères qui peuvent être éventuellement réticulés. Ces polymères réticulés apportent aux compositions bitumineuses des propriétés élastiques nettement améliorées. Cependant, la réticulation des polymères est irréversible : une fois la réticulation effectuée, il n'est pas possible de revenir à l'état initial existant avant la réaction de réticulation. Les compositions bitumineuses réticulées ont ainsi de bonnes propriétés élastiques, mais présentent une viscosité très élevée. Un des inconvénients liés à cette viscosité élevée, est la nécessité de chauffer le bitume réticulé à une température de mise en œuvre et d'application supérieure à celle d'un bitume non réticulé, ce qui accroît les dépenses énergétiques et nécessite l'usage de protections supplémentaires pour les opérateurs.

Suivant les applications visées, il est nécessaire de trouver le bon compromis entre les propriétés mécaniques dont l'élasticité, la dureté, la consistance, la fluidité et la viscosité, notamment la viscosité à chaud du liant.

Une autre problématique dans l'utilisation du bitume est liée à son transport, sa manipulation et son stockage. De manière générale, le bitume est stocké et transporté à chaud, en vrac, dans des camions-citernes ou par bateaux à des températures élevées de l'ordre de 120°C à 180°C. Or, le stockage et le transport du bitume à chaud présentent certains inconvénients. Le transport du bitume à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume à chaud sous sa forme fluide sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume en conditionnement à température ambiante ne représente qu'une fraction minime des quantités transportées dans le monde, mais il correspond à des besoins bien réels pour les régions géographiques d'accès difficile et coûteux par les moyens de transport traditionnels.

EP1917309 enseigne la préparation d'une base bitume présentant certaines caractéristiques d'un bitume soufflé par l'addition d'un additif de soufflage de formule Ar₁-R-Ar₂. Ce document n'est pas concerné pas les problématiques liées au transport et/ou au stockage des compositions qu'il divulgue.

La demande WO 2008107551 décrit un mode de réticulation réversible des compositions bitumineuses basé sur l'utilisation d'additifs organogélateurs. Les compositions bitumineuses réticulées de manière thermoréversible ainsi obtenues sont dures aux températures d'usage et présentent une viscosité réduite aux températures d'application.

La demande WO 2016/016320 décrit des pains de bitumes comprenant un additif chimique. Ces pains présentent une bonne résistance au fluage et ne collent pas entre eux permettant ainsi le transport et/ou le stockage et/ou la manipulation optimisés.

La demande WO 2018/115729 divulgue la préparation de liant, notamment de liant bitumineux, sous forme divisée, ledit liant comprenant au moins un composé acide de formule R-(COOH)_{z} et au moins un composé amide de formule R'-(NH)ₙCONH-(X)ₘ-(NHCO)ₚ(NH)ₙ-R".

Le bitume sous forme divisée tel que divulgué dans ce document permet le transport et/ou le stockage et/ou la manipulation du bitume à température ambiante sans que celui-ci ne flue, ainsi que la réduction de l'adhésion et de l'agglomération entre elles des unités de bitume.

Aucun de ces documents ne divulgue de compositions comprenant l'association de plus de deux additifs organogélateurs.

Dans la continuité de ses travaux, la Demanderesse a découvert de manière surprenante une nouvelle composition bitumineuse solide à température ambiante, utilisable comme liant routier ou comme liant d'étanchéité et permettant d'éviter et de réduire plus efficacement l'adhésion et l'agglomération lors de son transport et/ou stockage et/ou manipulation, à température ambiante élevée, sur des longues périodes et dont les propriétés sont conservées au cours du temps par rapport aux bitumes sous forme divisée de l'art antérieur.

Plus précisément, la Demanderesse a mis en évidence que cette nouvelle composition bitumineuse, conditionnée sous forme divisée, notamment sous la forme de pains, permet de résister plus efficacement au fluage dans des conditions extrêmes de transport et/ou de stockage et/ou de manipulation, en particulier dans des conditions de compression, notamment dues au stockage, sur des périodes très longues.

### Résumé de l'invention

L'invention concerne tout d'abord une composition bitumineuse comprenant au moins :
a) du bitume,
b) un composé de formule générale (I) :

   R₁-(COOH)_{z} (I)

   dans laquelle R₁ représente une chaîne hydrocarbonée linéaire ou ramifiée, comprenant de 4 à 68 atomes de carbone, et z est un entier variant de 2 à 4,
c) un composé de formule générale (II) :

   R₂-(NH)ₙCONH-X-(NHCO)ₚ(NH)ₙ-R₃ (II)

   dans laquelle :
   - les groupements R₂ et R₃, identiques ou différents, représentent une chaîne hydrocarbonée comprenant de 1 à 22 atomes de carbone, et comprenant éventuellement des hétéroatomes tels que N, O, S, et R₃ peut être H,
   - le groupement X représente une chaîne hydrocarbonée comprenant de 1 à 22 atomes de carbone, éventuellement substituée, et comprenant éventuellement des hétéroatomes, tels que N, O, S,
   - n et p sont des entiers ayant une valeur de 0 ou 1 indépendamment l'un de l'autre.
d) un composé de formule générale (III) :

   Arl-R-Ar2 (III)

   dans laquelle :
   - Ar1 et Ar2 représentent indépendamment l'un de l'autre un groupement aromatique comprenant de 6 à 20 atomes de carbone choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
   - R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride.

De préférence, le composé de formule (I) est choisi parmi les diacides de formule générale (IA) :

HOOC-C_{w}H_{2w}-COOH (IA)

avec w un entier allant de 4 à 22, de préférence de 4 à 12.

De préférence, le composé de formule générale (II) est choisi parmi les composés de formule générale (IIA) :

R₂-CONH-X-NHCO-R₃ (IIA)

dans laquelle R₂, R₃ et X sont tels que définis ci-dessus.

De préférence, le composé de formule générale (III) est le 2',3-bis[(3-[3, 5-di-*tert*-butyl-4-hydroxyphenyl]propionyl)]propionohydrazide.

Avantageusement, la composition bitumineuse selon l'invention comprend de 0,1% à 10% en masse d'un ou de plusieurs composés de formule (I), plus préférentiellement de 0,5% à 6% en masse, plus préférentiellement de 0,5% à 5% en masse encore plus préférentiellement de 0,5% à 2,5% en masse, par rapport à la masse totale de la composition bitumineuse.

Avantageusement, la composition bitumineuse selon l'invention comprend de 0,1% à 10% en masse d'un ou de plusieurs composés de formule (II), plus préférentiellement de 0,5% à 6% en masse, plus préférentiellement de 0,5% à 5% en masse encore plus préférentiellement de 0,5% à 3,5% en masse, par rapport à la masse totale de la composition bitumineuse.

Avantageusement, la composition bitumineuse selon l'invention comprend de 0,1% à 10% en masse d'un ou de plusieurs composés de formule (III), plus préférentiellement de 0,5% à 6% en masse, plus préférentiellement de 0,5% à 5% en masse encore plus préférentiellement de 0,5% à 3% en masse, par rapport à la masse totale de la composition bitumineuse.

De préférence, la composition bitumineuse selon l'invention est sous forme solide et divisée à température ambiante, de préférence sous la forme de pains.

L'invention concerne également un procédé de préparation d'une composition bitumineuse telle que définie ci-dessus et de manière détaillée ci-dessous, ledit procédé comprenant la mise en contact du bitume et des composés de formule (I), (II) et (III) à une température allant de 70°C à 220°C, suivi éventuellement de la mise en forme de la composition bitumineuse obtenue sous forme divisée, de préférence sous la forme de pains.

L'invention vise également une composition bitumineuse susceptible d'être obtenue par le procédé défini ci-dessus et de manière détaillée ci-dessous.

L'invention concerne en outre l'utilisation d'une composition bitumineuse telle que définie ci-dessus et de manière détaillée ci-dessous comme liant routier, de préférence pour la fabrication d'enrobés.

L'invention a par ailleurs pour objet un procédé de fabrication d'enrobés comprenant au moins un liant routier et des granulats ou des agrégats d'enrobés bitumineux recyclés, ledit liant routier étant sous la forme d'une composition bitumineuse telle que définie ci-dessus de manière détaillée ci-dessous, ce procédé comprenant au moins les étapes de :
- chauffage des granulats ou des agrégats à une température allant de 100°C à 180°C, de préférence de 120°C à 180°C,
- mélange des granulats ou des agrégats avec le liant routier dans une cuve telle qu'un malaxeur ou un tambour malaxeur,
- obtention d'enrobés.

Avantageusement, le procédé de fabrication d'enrobés défini ci-dessus et de manière détaillée ci-dessous ne comporte pas d'étape de chauffage du liant routier avant son mélange avec les granulats ou les agrégats.

L'invention vise également l'utilisation d'une composition bitumineuse telle que définie ci-dessus et de manière détaillée ci-dessous pour la préparation d'un revêtement d'étanchéité, d'une membrane ou d'une couche d'imprégnation.

L'invention concerne enfin un procédé de transport et/ou de stockage et/ou de manipulation de bitume, ledit bitume étant transportée et/ou stockée et/ou manipulée à température sous la forme d'une composition bitumineuse telle que définie ci-dessus et de manière détaillée ci-dessous, de préférence sous forme solide et divisée.

### Description détaillée

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes, sauf mention contraire explicite. Cette expression signifie donc que l'intervalle visé comprend les valeurs X, Y et toutes les valeurs allant de X à Y.

### Composition bitumineuse selon l'invention

La présente invention concerne une composition bitumineuse comprenant au moins :
a) du bitume,
b) un composé de formule générale (I) :

   R₁-(COOH)_{z} (I)

   dans laquelle R₁ représente une chaîne hydrocarbonée linéaire ou ramifiée, saturée ou insaturée comprenant de 4 à 68 atomes de carbone, et z est un entier variant de 2 à 4,
c) un composé de formule générale (II) :

   R₂-(NH)ₙCONH-X-(NHCO)ₚ(NH)ₙ-R₃ (II)

   dans laquelle :
   - les groupements R₂ et R₃, identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en C₅-C₂₄ et/ou des hétérocycles hydrocarbonés en C₄-C₂₄ comprenant un ou plusieurs hétéroatomes tels que N, O, S, et R₃ peut être H,
   - le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en C₅-C₂₄ et/ou des hétérocycles hydrocarbonés en C₄-C₂₄ comprenant un ou plusieurs hétéroatomes tels que N, O, S,
   - n et p sont des entiers ayant une valeur de 0 ou 1 indépendamment l'un de l'autre, et
d) un composé de formule générale (III) :

   Arl-R-Ar2 (III)

   dans laquelle :
   - Ar1 et Ar2 représentent indépendamment l'un de l'autre un groupement aromatique comprenant de 6 à 20 atomes de carbone et choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
   - R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride.

De préférence, la composition selon l'invention est essentiellement constituée :
a) de bitume,
b) d'un ou de plusieurs composés de formule (I) telle que définie ci-dessus et de manière détaillée ci-dessous,
c) d'un ou de plusieurs composés de formule (II) telle que définie ci-dessus et de manière détaillée ci-dessous,
d) d'un ou de plusieurs composés de formule (III) telle que définie ci-dessus et de manière détaillée ci-dessous, et
e) optionnellement, d'un ou de plusieurs adjuvants polymère oléfiniques tels que définis ci-dessous.

Plus préférentiellement, la composition selon l'invention comprend, de préférence est essentiellement constituée :
a) de 70% à 99,7% en masse de bitume,
b) de 0,1% à 10% en masse d'un ou de plusieurs composés de formule (I) telle que définie ci-dessus et de manière détaillée ci-dessous,
c) de 0,1% à 10% en masse d'un ou de plusieurs composés de formule (II) telle que définie ci-dessus et de manière détaillée ci-dessous,
d) de 0,1% à 10% en masse d'un ou de plusieurs composés de formule (III) telle que définie ci-dessus et de manière détaillée ci-dessous, et
e) optionnellement, de 0,05% à 15% en masse d'un ou de plusieurs adjuvants polymère oléfiniques tels que définis ci-dessous,
par rapport à la masse totale de la composition bitumineuse selon l'invention.

Avantageusement, la composition selon l'invention comprend, de préférence est essentiellement constituée :
a) de 82% à 98,5% en masse de bitume,
b) de 0,5% à 6% en masse d'un ou de plusieurs composés de formule (I) telle que définie ci-dessus et de manière détaillée ci-dessous,
c) de 0,5% à 6% en masse d'un ou de plusieurs composés de formule (II) telle que définie ci-dessus et de manière détaillée ci-dessous,
d) de 0,5% à 6% en masse d'un ou de plusieurs composés de formule (III) telle que définie ci-dessus et de manière détaillée ci-dessous, et
e) optionnellement, de 0,1% à 10% en masse d'un ou de plusieurs adjuvants polymère oléfiniques tels que définis ci-dessous,
par rapport à la masse totale de la composition bitumineuse selon l'invention.

Plus avantageusement, la composition selon l'invention comprend, de préférence est essentiellement constituée :
a) de 85% à 98,5% en masse de bitume,
b) de 0,5% à 5% en masse d'un ou de plusieurs composés de formule (I) telle que définie ci-dessus et de manière détaillée ci-dessous,
c) de 0,5% à 5% en masse d'un ou de plusieurs composés de formule (II) telle que définie ci-dessus et de manière détaillée ci-dessous,
d) de 0,5% à 5% en masse d'un ou de plusieurs composés de formule (III) telle que définie ci-dessus et de manière détaillée ci-dessous, et
e) optionnellement, de 0,5% à 6% en masse d'un ou de plusieurs adjuvants polymère oléfiniques tels que définis ci-dessous,
par rapport à la masse totale de la composition bitumineuse selon l'invention.

Encore plus avantageusement, la composition selon l'invention comprend, de préférence est essentiellement constituée :
a) de 91% à 98,5% en masse de bitume,
b) de 0,5% à 2,5% en masse d'un ou de plusieurs composés de formule (I) telle que définie ci-dessus et de manière détaillée ci-dessous,
c) de 0,5% à 3,5% en masse d'un ou de plusieurs composés de formule (II) telle que définie ci-dessus et de manière détaillée ci-dessous,
d) de 0,5% à 3% en masse d'un ou de plusieurs composés de formule (III) telle que définie ci-dessus et de manière détaillée ci-dessous, et
e) optionnellement, de 0,5% à 6% en masse d'un ou de plusieurs adjuvants polymère oléfiniques tels que définis ci-dessous,
par rapport à la masse totale de la composition bitumineuse selon l'invention.

### Le bitume

La composition bitumineuse selon l'invention peut contenir des bitumes issus de différentes origines. Parmi les bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bitumes selon l'invention sont avantageusement choisis parmi les bitumes provenant du raffinage du pétrole brut ou issus des sables bitumineux. Les bitumes peuvent être choisis parmi les bitumes ou mélanges de bitumes provenant du raffinage du pétrole brut, en particulier des bitumes contenant des asphaltènes ou des brais. Les bitumes peuvent être obtenus par des procédés conventionnels de fabrication des bitumes en raffinerie, en particulier par distillation directe et/ou distillation sous vide du pétrole. Ces bitumes peuvent être éventuellement viscoréduits et/ou désasphaltés et/ou rectifiés à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus de la distillation atmosphérique. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air. Les différents bitumes ou bases bitumes obtenus par les procédés de raffinage peuvent être combinés entre eux pour obtenir le meilleur compromis technique. Le bitume peut aussi être un bitume de recyclage. Les bitumes peuvent être des bitumes de grade dur ou de grade mou.

Avantageusement, le bitume est choisi parmi les bitumes d'origine naturelle ; les bitumes issus des sables bitumineux ; les bitumes issus du raffinage du pétrole brut tels que les résidus de distillation atmosphérique, les résidus de distillation sous vide, les résidus viscoréduits, les résidus soufflés et leurs mélanges ; et leurs combinaisons ou parmi les bitumes synthétiques autrement appelés liants clairs.

Dans un mode particulier selon l'invention, le bitume peut comprendre en outre au moins un polymère et/ou un fluxant.

A titre d'exemples de polymères pour bitume, on peut citer les élastomères tels que les copolymères SB, SBS, SIS, SBS^{∗}, SBR, EPDM, polychloroprène, polynorbornène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères éthylène-propylène, les caoutchoucs, les polyisobutylènes, les SEBS, les ABS.

D'autres additifs peuvent encore être ajoutés au bitume selon l'invention. Il s'agit par exemple d'agents de vulcanisation et/ou d'agents de réticulation susceptibles de réagir avec un polymère, lorsqu'il s'agit d'un élastomère et/ou d'un plastomère, pouvant être fonctionnalisés et/ou pouvant comporter des sites réactifs.

Parmi les agents de vulcanisation, on peut citer ceux à base de soufre et ses dérivés, utilisés pour réticuler un élastomère à des teneurs de 0,01% à 30% en masse par rapport à la masse d'élastomère.

Parmi les agents de réticulation, on peut citer les agents de réticulation cationiques tels que les mono ou polyacides, ou les anhydrides carboxyliques, les esters d'acides carboxyliques, les acides sulfoniques, sulfuriques, phosphoriques, voire les chlorures d'acides, les phénols, à des teneurs de 0,01% à 30% en masse par rapport à la masse de polymère. Ces agents sont susceptibles de réagir avec l'élastomère et/ou le plastomère fonctionnalisé. Ils peuvent être utilisés en complément ou en remplacement des agents de vulcanisation.

De préférence, la composition bitumineuse selon l'invention comprend de 70% à 99,7% en masse de bitume, plus préférentiellement de 82% à 98,5% en masse de bitume, encore plus préférentiellement de 85% à 98,5% en masse de bitume, et avantageusement de 91% à 98,5% en masse de bitume, par rapport à la masse totale de la composition bitumineuse selon l'invention.

### Le composé de formule (I)

La composition bitumineuse selon l'invention comprend tout d'abord au moins un composé de formule générale (I) :

R₁-(COOH)_{z} (I)

dans laquelle R₁ représente une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R₁ est une chaîne linéaire saturée de formule C_{w}H_{2w} avec w un entier variant de 4 à 22, de préférence de 4 à 12.

Les composés de formule (I) peuvent notamment être des diacides (z = 2), des triacides (z = 3) ou des tétracides (z = 4). De préférence, le composé de formule (I) est choisi parmi les diacides avec z = 2. De préférence, les diacides ont pour formule générale HOOC-C_{w}H_{2w}-COOH avec w un entier variant de 4 à 22, de préférence de 4 à 12 et où z = 2 et R₃= C_{w}H_{2w}.

Avantageusement, le composé de formule (I) choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12. Plus avantageusement, le composé de formule (I) est l'acide sébacique.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

La teneur en composé(s) de formule (I) dans la composition bitumineuse selon l'invention va, de préférence, de 0,1% à 10% en masse, plus préférentiellement de 0,5% à 6% en masse, plus préférentiellement de 0,5% à 5% en masse et encore plus préférentiellement de 0,5% à 2.5% en masse, par rapport à la masse totale de la composition bitumineuse selon l'invention.

### Le composé de formule (II)

La composition bitumineuse selon l'invention comprend également au moins un composé de formule générale (II) :

R₂-(NH)ₙCONH-X-(NHCO)ₚ(NH)ₙ-R₃ (II)

dans laquelle :
- les groupements R₂ et R₃, identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en C₅-C₂₄ et/ou des hétérocycles hydrocarbonés en C₄-C₂₄ comprenant un ou plusieurs hétéroatomes tels que N, O, S, et R₃ peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en C₅-C₂₄ et/ou des hétérocycles hydrocarbonés en C₄-C₂₄ comprenant un ou plusieurs hétéroatomes tels que N, O, S ;
- n et p sont des entiers ayant une valeur de 0 ou 1 indépendamment l'un de l'autre.

De préférence, le groupement R₂ et/ou R₃ comprend une chaîne hydrocarbonée aliphatique de 4 à 22 atomes de carbone, notamment, choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

De préférence, le groupement X représente une chaîne hydrocarbonée linéaire, saturée comprenant de 1 à 22 atomes de carbone, avantageusement de 1 à 12 atomes de carbone, encore mieux de 1 à 4 atomes de carbone. Plus préférentiellement, le groupement X est choisi parmi les groupements C₂H₄, C₃H₆.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R₂, X et R₃ est supérieur ou égal à 10, avantageusement supérieur ou égal à 14, de préférence supérieur ou égal à 18.

De préférence, le composé de formule générale (II) est choisi parmi ceux qui satisfont à la condition : le nombre des atomes de carbone de l'un au moins de R₂ et R₃ est supérieur ou égal à 10, avantageusement supérieur ou égal à 12, de préférence supérieur ou égal à 14.

De préférence, le composé de formule générale (II) est choisi parmi ceux de formule (IIA) :

R₂-CONH-X-NHCO-R₃ (IIA)

dans laquelle R₂, R₃ et X ont la même définition que ci-dessus.

De préférence, dans la formule (IIA), le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆. Plus préférentiellement, le composé de formule générale (IIA) est choisi parmi les dérivés hydrazides tels que les composés C₅H₁₁-CONH-NHCO-C₅H₁₁, C₉H₁₉-CONH-NHCO-C₉H₁₉, CₙH₂₃-CONH-NHCO-CₙH₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₂₃, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂. De façon encore plus avantageuse, le composé de formule générale (IIA) est le N,N'-éthylènedi(stéaramide) de formule C₁₇H₃₅-CONH-CH₂-CH₂-NHCO-C₁₇H₃₅.

La teneur en composé(s) de formule (II) dans la composition bitumineuse selon l'invention va, de préférence, de 0,1% à 10% en masse, plus préférentiellement de 0,5% à 6% en masse, plus préférentiellement de 0,5% à 5% en masse et encore plus préférentiellement de 0,5% à 3,5% en masse, par rapport à la masse totale de la composition bitumineuse selon l'invention.

### Le composé de formule (III)

La composition bitumineuse selon l'invention comprend enfin au moins un composé de formule générale (III) :

Arl-R-Ar2 (III)

dans laquelle :
- Ar1 et Ar2 représentent indépendamment l'un de l'autre un groupement aromatique comprenant de 6 à 20 atomes de carbones et choisi parmi un noyau benzène ou un système de noyaux aromatiques condensés, ledit groupement aromatique étant substitué par au moins un groupement hydroxyle, et optionnellement par un ou plusieurs groupements d'alkyle en C₁-C₂₀, et
- R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride, de préférence un groupement hydrazide.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle.

De préférence, R est en position *para* par rapport à un groupe hydroxyle de Ar1 et/ou Ar2.

Avantageusement, le composé de formule (III) est le 2',3-bis[(3-[3, 5-di-*tert* butyl-4-hydroxyphenyl]propionyl)]propionohydrazide.

La teneur en composé(s) de formule (III) dans la composition bitumineuse selon l'invention va, de préférence, de 0,1% à 10% en masse, plus préférentiellement de 0,5% à 6% en masse, plus préférentiellement de 0,5% à 5% en masse et encore plus préférentiellement de 0,5% à 3% en masse, par rapport à la masse totale de la composition bitumineuse selon l'invention.

### Additifs optionnels

Selon un mode de réalisation, la composition bitumineuse selon l'invention peut également comprendre un ou plusieurs additifs optionnels, de préférence choisi parmi les adjuvants polymère oléfiniques.

L'adjuvant polymère oléfinique est, de préférence, choisi dans le groupe consistant en (a) les copolymères éthylène/(méth)acrylate de glycidyle ; (b) les terpolymères éthylène/monomère A/monomère B et (c) les mélanges de ces copolymères.
(a) Les copolymères éthylène/(méth)acrylate de glycidyle sont, avantageusement, choisis parmi les copolymères, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères, de préférence statistiques, d'éthylène, d'un monomère A et d'un monomère B.

Le monomère A est choisi parmi l'acétate de vinyle et les acrylates ou méthacrylates d'alkyle en C₁ à C₆, de préférence choisi parmi les acrylates ou les méthacrylates d'alkyle en C₁ à C₆, encore plus préférentiellement en C₁-C₃. Avantageusement, le monomère A est choisi parmi l'acrylate d'éthyle et le méthacrylate d'éthyle. Encore plus avantageusement, le monomère A est l'acrylate d'éthyle.

Le monomère B est choisi parmi l'acrylate de glycidyle et le méthacrylate de glycidyle. Avantageusement, le monomère B est le méthacrylate de glycidyle.

Les terpolymères éthylène/monomère A/monomère B comprennent de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.
(c) L'adjuvant polymère oléfinique peut consister en un mélange de deux ou plus de copolymères choisis dans les catégories (a) et (b).

L'adjuvant polymère oléfinique est, de préférence, choisi parmi les terpolymères (b) éthylène/monomère A/monomère B décrits ci-dessus et parmi les mélanges (c) les comprenant. L'adjuvant polymère oléfinique est, avantageusement, choisi parmi les terpolymères (b) éthylène/monomère A/monomère B décrits ci-dessus et parmi les mélanges (c) dans lesquels les terpolymères (b) représentent au moins 50% en masse par rapport à la masse totale du mélange, préférentiellement au moins 75% en masse, encore mieux au moins 90% en masse. Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

De préférence, la masse moléculaire moyenne en nombre (Mn) de l'adjuvant polymère oléfinique, déterminée par chromatographie par perméation de gel avec un étalon de polystyrène, va de 5 000 à 50 000 g.mol⁻¹, plus préférentiellement de 10 000 à 40 000 g.mol⁻¹, et encore plus préférentiellement de 25 000 à 40 000 g.mol⁻¹.

De préférence, la masse moléculaire moyenne en poids (Mw) de l'adjuvant polymère oléfinique, déterminée par chromatographie par perméation de gel avec un étalon de polystyrène, va de 10 000 à 250 000 g.mol⁻¹, plus préférentiellement de 50 000 à 200 000 g.mol⁻¹, et encore plus préférentiellement de 10 000 à 150 000 g.mol⁻¹.

De préférence, selon ce mode de réalisation, la composition bitumineuse selon l'invention comprend de 0,05% à 15% en masse, de préférence de 0,1% à 10% en masse, plus préférentiellement de 0,5% à 6% en masse d'adjuvant polymère oléfinique, par rapport à la masse totale de la composition bitumineuse selon l'invention.

### Procédé de préparation d'une composition bitumineuse selon l'invention

La présente invention concerne également un procédé de préparation d'une composition bitumineuse telle que définie ci-dessus, ce procédé comprenant la mise en contact, à une température allant de 70°C à 220°C, des composés de formule (I), (II) et (III), et éventuellement d'au moins un adjuvant polymère oléfinique tel que défini ci-dessus, avec du bitume, suivi éventuellement d'une étape de mise en forme de la composition bitumineuse, notamment sous forme divisée et de préférence sous la forme de pains.

Les composés de formule (I), (II) et (III) peuvent être mis en contact avec le bitume de manière simultanée, par addition directe des composés de formule (I), (II) et (III) dans le bitume, ou bien par ajouts successifs des différents composés de formule (I), (II) et (III). De préférence, les composés de formule (I), (II) et (III) sont mis en contact avec le bitume à une température allant de 90°C à 180°C, plus préférentiellement allant de 110°C à 180°C.

Le bitume mis-en-œuvre dans le procédé ci-dessus peut être utilisé pur ou additivé, notamment additivé avec un polymère ; sous forme anhydre ou sous la forme d'une émulsion ; ou encore en association avec des granulats sous la forme d'un enrobé.

Avantageusement, le procédé de préparation défini ci-dessus comprend les étapes suivantes :
(A) l'introduction d'un bitume dans un récipient équipé de moyens de mélange, et son chauffage à une température allant de 70°C à 220°C, de préférence allant de 90°C à 180°C, encore plus préférentiellement allant de 110°C à 180°C,
,(B) l'introduction simultanée ou successive des composés de formule (I), (II) et (III)
(C) optionnellement, l'introduction d'un ou de plusieurs adjuvants polymère oléfiniques,
(D) le mélange de la composition bitumineuse à une température allant de 70°C à 220°C, de préférence allant de 90°C à 180°C, encore plus préférentiellement allant de 110°C à 180°C, de préférence jusqu'à l'obtention d'une composition homogène, et
(E) éventuellement la mise en forme de la composition bitumineuse issue de l'étape (D), notamment sous forme divisée, de préférence sous la forme de pains.

Selon un mode de réalisation particulier, les étapes (B) et (C) définies ci-dessus sont réalisées simultanément de telle sorte que les composés de formule (I), (II) et (III) et le ou les adjuvants polymère oléfiniques sont introduits simultanément dans le bitume chauffé.

Selon un mode de réalisation particulier, l'étape (E) du procédé ci-dessus est suivie d'une étape (F) d'enrobage de la composition bitumineuse sous forme divisée, notamment sous la forme de pains, sur tout ou partie de sa surface par au moins un agent antiagglomérant. L'étape (F) d'enrobage de la composition bitumineuse sous forme divisée, notamment sous forme de pains, peut être réalisée selon tout procédé connu. L'enrobage peut par exemple être réalisé par trempage des unités de composition bitumeuse obtenues à la fin de l'étape (E) dans une composition de revêtement comprenant un ou plusieurs agents antiagglomérants, suivi d'une étape de séchage.

### Composition sous forme solide et divisée à température ambiante

Selon un mode de réalisation, la composition bitumineuse selon l'invention est sous forme solide et divisée à température ambiante.

De préférence, selon ce mode de réalisation, la composition selon l'invention comprend, en outre, au moins un adjuvant polymère oléfinique tel que défini ci-dessus.

Avantageusement, selon ce mode de réalisation, la composition bitumineuse selon l'invention est sous la forme de pains.

On entend par « pain », un bloc de la composition bitumineuse selon l'invention ayant une masse allant de 0,1 kg à 1000 kg, de préférence allant de 1 kg à 200 kg, plus préférentiellement allant de 1 kg à 50 kg, encore plus préférentiellement allant de 5 kg à 35 kg, encore plus préférentiellement allant de 10 kg à 30 kg, ledit bloc étant avantageusement parallélépipédique, de préférence étant un pavé. Le pain selon l'invention a, de préférence, un volume compris entre 100 cm³ et 50000 cm³, de préférence entre 5000 cm³ et 25000 cm³, plus préférentiellement entre 10000 cm³ et 30000 cm³, encore plus préférentiellement entre 14000 cm³ et 25000 cm³. Lorsque le pain selon l'invention est manipulé manuellement par une personne, la masse dudit pain peut varier de 1 à 20 kg, et de 20 à 50 kg dans le cas d'une manutention par deux personnes. Lorsque la manutention est réalisée par des équipements mécaniques, la masse du pain peut varier de 50 à 1000 kg. Le pain selon l'invention peut être fabriqué selon tout procédé connu, par exemple selon le procédé de fabrication décrit dans le document US2011/0290695.

Selon un mode de réalisation préféré, les pains de bitumes selon l'invention sont recouverts sur au moins une partie de leur surface d'un agent antiagglomérant.

Par « agent antiagglomérant », on entend au sens de l'invention tout composé qui limite et/ou réduit et/ou inhibe et/ou retarde l'agglomération et/ou l'adhésion entre elles de deux unités de bitume sous forme solide et divisée telle que définie ci-après lors de leur transport et/ou de leur stockage à température ambiante et qui assure leur fluidité lors de leur manipulation.

De préférence, l'agent antiagglomérant est choisi parmi les agents antiagglomérants particulaires et les agents antiagglomérants filmogènes et leurs mélanges, plus préférentiellement parmi les agents anti-agglomérants particulaires et les agents antiagglomérants thermofusibles.

### Les agents antiagglomérants particulaires

Selon une première variante, l'agent antiagglomérant est choisi parmi les agents antiagglomérants particulaires, de préférence d'origine minérale ou organique, plus préférentiellement d'origine minérale.

Par « agent antiagglomérant particulaire », on entend au sens de l'invention un agent antiagglomérant qui se présente à température ambiante sous la forme de particules divisées, notamment sous la forme de copeaux, de paillettes ou encore d'une poudre.

De préférence, l'agent antiagglomérant particulaire est choisi parmi : le talc ; les fines généralement de diamètre inférieur à 125 µm, telles que les fines siliceuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique; la chaux ; la chaux hydratée ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Avantageusement, l'agent antiagglomérant particulaire est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; les fumées de silice, notamment les fumées de silice hydrophobe ou hydrophile ; les silices pyrogénées, notamment les silices pyrogénées hydrophobes ou hydrophiles ; et leurs mélanges.

### Les agents antiagglomérants filmogènes

Selon une seconde variante, l'agent antiagglomérant est choisi parmi les agents antiagglomérants filmogènes.

Par « agent filmogène », on entend au sens de l'invention un composé susceptible de former à la surface d'un objet sur lequel il est appliqué/déposé un film, une enveloppe ou encore une pellicule, de préférence continu(e).

De préférence, l'agent antiagglomérant filmogène est choisi parmi les agents antiagglomérants thermofusibles, les agents antiagglomérants de type gel et leurs mélanges.

Par « matériau thermofusible », on entend au sens de l'invention un matériau susceptible de se ramollir sous l'effet de la chaleur.

Lorsque l'agent antiagglomérant est choisi parmi les agents antiagglomérants thermofusibles, il est, de préférence, choisi parmi le polypropylène, le polyéthylène et les mélanges de polyéthylène et polypropylène.

Les pains de bitume enrobés d'un agent antiagglomérant thermofusible présentent l'avantage d'être prêts à l'emploi, c'est-à-dire qu'ils peuvent être directement chauffés dans le fondoir ou éventuellement introduits directement dans l'unité d'enrobage de fabrication des enrobés routiers, sans déballage préalable. L'agent antiagglomérant thermofusible qui fond avec le cœur bitumineux des pains selon l'invention n'affecte pas les propriétés de la composition bitumineuse.

Par « agent antiagglomérant de type gel », on entend au sens de l'invention un composé qui permet d'augmenter la viscosité d'un liquide ou d'une composition de façon à former un film de gel. De préférence, l'agent antiagglomérant de type gel présente une viscosité dynamique supérieure ou égale à 50 mPa.s, de préférence de 50 mPa.s à 550 mPa.s, plus préférentiellement de 80 mPa.s à 450 mPa.s, la viscosité étant une viscosité Brookfield mesurée à 65°C. La viscosité de l'agent antiagglomérant de type gel est mesurée à 65°C au moyen d'un viscosimètre Brookfield CAP 2000+ et à une vitesse de rotation de 750 tr/min. La lecture de la mesure est réalisée après 30 secondes pour chaque température.

Préférentiellement, l'agent antiagglomérant de type gel est choisi parmi :
- les dérivés de la cellulose, de préférence les éthers de cellulose,
- les composés gélifiants, de préférence d'origine végétale ou animale, tels que : la gélatine, l'agar-agar, les alginates, les amidons, les amidons modifiés, ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol₋₁ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000) ;
- les mélanges de tels composés.

Plus préférentiellement, l'agent antiagglomérant de type gel est choisis parmi :
- les dérivés de la cellulose, de préférence les éthers de cellulose,
- les composés gélifiants de préférence d'origine végétale ou animale, tels que : la gélatine, l'agar-agar, les alginates, les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Avantageusement, l'agent antiagglomérant de type gel est choisi parmi les éthers de cellulose.

De préférence, selon ce mode de réalisation, le ou les agents antiagglomérants recouvrent au moins 50% de la surface des pains de bitume, de préférence au moins 60%, préférentiellement au moins 70%, plus préférentiellement au moins 80%, et encore plus préférentiellement au moins 90%.

Avantageusement, la quantité d'agent(s) antiagglomérant(s) recouvrant au moins une partie de la surface des pains de bitume selon l'invention est comprise entre 0,2% et 10% en masse, de préférence entre 0,5% et 8% en masse, plus préférentiellement entre 0,5% et 5% en masse, par rapport à la masse totale des pains de bitume.

De préférence, l'épaisseur moyenne de la couche d'agent(s) antiagglomérant(s) est supérieure ou égale à 20 µm, plus préférentiellement va de 20 à 1 mm et plus préférentiellement de l'ordre de 20 à 100 µm.

Avantageusement, l'agent antiagglomérant est choisi parmi les matériaux thermofusibles et les agents anti-agglomérants particulaires tels que définis ci-dessus, éventuellement sous la forme de mélanges. Le pain selon l'invention est avantageusement recouvert sur tout ou partie de sa surface d'un ou de plusieurs matériaux thermofusibles formant un film thermofusible.

Plus avantageusement, le pain selon l'invention est emballé d'un film thermofusible mis en place selon tout procédé connu, de préférence par un film en polypropylène, polyéthylène ou un mélange de polyéthylène et polypropylène. La composition bitumineuse conditionnée en pain de bitume emballé d'un film thermofusible présente l'avantage d'être prête à l'emploi, c'est-à-dire qu'elle peut être directement chauffée dans le fondoir ou éventuellement introduite directement dans l'unité d'enrobage de fabrication des enrobés routiers, sans déballage préalable. Le film thermofusible qui fond avec la composition bitumineuse selon l'invention n'affecte pas ses propriétés.

Selon un mode de réalisation, le pain selon l'invention peut également être conditionné dans un carton selon tout procédé connu. En particulier, le pain selon l'invention est conditionné dans un carton en faisant couler à chaud la composition bitumineuse selon l'invention dans un carton dont la paroi de la face interne est siliconée puis refroidit, les dimensions du carton étant adaptées au poids et/ou volume du pain selon l'invention souhaité. Lorsque le pain selon l'invention est emballé d'un film thermofusible ou est conditionné dans un carton, la Demanderesse a démontré que la détérioration dudit film thermofusible ou dudit carton lors du transport et/ou du stockage à température ambiante et même élevée dudit pain n'entrainait pas le fluage du pain selon l'invention. Par conséquent, les pains selon l'invention conservent leur forme initiale et ne collent pas entre eux lors de leur transport et/ou stockage à température ambiante élevée malgré le fait que le film thermofusible ou le carton soit endommagé.

Sans vouloir être liée à une quelconque théorie, la Demanderesse estime que l'absence de fluage de la composition bitumineuse solide à température ambiante et sous forme divisée, notamment sous la forme de pain lors de son transport et/ou stockage à température ambiante, en particulier élevée, est due à la formulation de la composition bitumineuse selon l'invention et notamment à la présence de l'association des composés de formule (I), (II) et (III) définis ci-dessus, pris seuls ou en mélange au sein de la composition bitumineuse.

### Procédé de transport et/ou de stockage et/ou de manipulation

L'invention concerne également un procédé de transport et/ou de stockage et/ou de manipulation de bitume, ledit bitume étant transporté et/ou stocké et/ou manipulé à température ambiante, notamment à température ambiante élevée, sous la forme d'une composition bitumineuse selon l'invention, de préférence sous forme solide et divisée, notamment sous la forme de pains.

De préférence, la composition bitumineuse selon l'invention est transportée et/ou stockée à une température ambiante, notamment à une température ambiante élevée pendant une durée supérieure ou égale à 2 mois, préférence à 3 mois.

On entend par température ambiante, la température d'usage du bitume, étant entendu que la température ambiante implique qu'aucun apport de chaleur n'est apporté autre que celui résultant des conditions climatiques. Ainsi, la température ambiante peut atteindre des valeurs élevées, inférieures à 100°C durant les périodes estivales, en particulier dans les régions géographiques à climat chaud.

De préférence, la température ambiante est inférieure à 100°C. Avantageusement, la température ambiante est de 20°C à 50°C, de préférence de 25°C à 50°C, de préférence de 25°C à 40°C. Avantageusement, la température ambiante élevée est de 40°C à 90°C, de préférence de 50°C à 85°C encore plus préférentiellement de 50°C à 75°C, encore plus préférentiellement de 50°C à 70°C.

Les compositions bitumineuses selon la présente invention sous forme solide divisée à température ambiante sont remarquables en ce qu'elles sont facilement manipulables, même à des températures ambiantes élevées. Les compositions bitumineuses selon la présente invention sous forme solide et divisée à température ambiante permettent le transport et/ou le stockage de la composition bitumineuse selon l'invention dans des conditions optimales, en particulier sans l'apparition de phénomènes de fluage lors de leur transport et/ou de leur stockage, même lorsque la température ambiante est élevée et sans dégrader les propriétés de ladite composition bitumineuse, voire en les améliorant.

### Utilisation des compositions bitumineuses selon l'invention

Diverses utilisations des compositions bitumineuses obtenues selon l'invention sont envisagées, notamment pour la préparation d'un liant bitumineux anhydre ou sous forme d'émulsion, un bitume polymère, ou un bitume fluxé.

### Utilisation comme liant routier

La présente invention concerne l'utilisation d'une composition bitumineuse selon l'invention, notamment sous forme solide et divisée à température ambiante, comme liant routier.

De préférence, la composition bitumineuse selon l'invention est utilisée, éventuellement en mélange avec des granulats ou des agrégats d'enrobés bitumineux recyclés, pour fabriquer un enduit superficiel, un enrobé à chaud, un enrobé à froid, un enrobé coulé à froid, une grave émulsion, une couche de base, une couche de liaison, une couche d'accrochage ou une couche de roulement. Ces applications visent notamment des enrobés bitumineux comme matériaux pour la construction et l'entretien des corps de chaussée et de leur revêtement, ainsi que pour la réalisation de tous travaux de voiries. On peut citer d'autres associations de la composition bitumineuse et du granulat possédant des propriétés particulières, telles que les couches anti-orniérantes, les enrobés drainants, ou les asphaltes (mélange entre un liant bitumineux et des granulats du type du sable).

L'invention concerne en particulier un procédé de fabrication d'enrobés comprenant au moins un liant routier et des granulats ou des agrégats d'enrobés bitumineux recyclés, le liant routier étant sous la forme d'une composition selon l'invention notamment sous forme solide et divisée à température ambiante.

De préférence, le procédé de fabrication d'enrobés selon l'invention comprend au moins les étapes de :
- chauffage des granulats ou des agrégats à une température allant de 100°C à 180°C, de préférence de 120°C à 180°C,
- mélange des granulats ou des agrégats avec le liant routier notamment sous forme solide et divisée dans une cuve telle qu'un malaxeur ou un tambour malaxeur,
- obtention d'enrobés.

Dans le cas où la composition bitumineuse selon l'invention est sous forme solide et divisée, le procédé de fabrication d'enrobés selon l'invention est avantageux en ce qu'il ne requiert pas d'étape de chauffage de la composition bitumineuse selon l'invention avant mélange avec les agrégats d'enrobés recyclés ou les granulats car au contact du mélange d'agrégats chaud ou au contact du mélange de granulats chaud, la composition bitumineuse selon l'invention solide à température ambiante fond.

L'invention a encore pour objet un procédé de préparation d'un enduit superficiel, un enrobé à chaud, un enrobé tiède, un enrobé à froid, un enrobé coulé à froid, une grave émulsion, ledit liant étant associé à des granulats et/ou des fraisats de recyclage, ce procédé comprenant au moins la préparation d'une composition bitumineuse selon l'invention, notamment sous forme solide et divisée à température ambiante.

### Applications industrielles

Un autre objet de l'invention concerne l'utilisation d'une composition bitumineuse selon l'invention, notamment sous forme solide et divisée à température ambiante, dans diverses applications industrielles, notamment pour préparer un revêtement d'étanchéité, une membrane ou une couche d'imprégnation.

Les compositions bitumineuses selon l'invention sont particulièrement adaptées à la fabrication de membranes d'étanchéité, de membranes anti-bruit, de membranes d'isolation, des revêtements de surface, des dalles de moquette, des couches d'imprégnation.

L'invention concerne enfin un procédé de préparation un revêtement d'étanchéité, une membrane ou une couche d'imprégnation, ce procédé comprenant au moins la mise en œuvre d'une composition bitumineuse selon l'invention, notamment sous forme solide et divisée à température ambiante.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Exemples :

Dans ces exemples, les parties et pourcentages sont exprimés en poids sauf indication contraire.

### Matériel et méthodes

Les caractéristiques rhéologiques et mécaniques du bitume et des compositions bitumineuses auxquelles il est fait référence dans ces exemples sont mesurées suivant les méthodes indiquées dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10mm | NF EN 1426 |
| Température de ramollissement bille et anneau | TBA | °C | NF EN 1427 |
| Force maximale | Fmax | N | Voir protocole ci-dessous |

### La base bitume :

On choisit une base bitume de grade 35/50, notée B0, ayant une pénétrabilité P25 de 44 1/10 mm et une TBA de 51,6°C et disponible commercialement auprès de Total Marketing Services.

### Les additifs :

- Additif **A1** de formule (I) : l'acide sébacique,
- Additif **A2** de formule (II) : le N,N'-éthylènedi(stéaramide) commercialisé par la société Croda sous le nom Crodawax 140 ^{®}, et
- Additif **A3** de formule (III) : le 2',3-bis[(3-[3, 5-di-tert-butyl-4-hydroxyphényl] propionyl)]propionohydrazide (CAS 32687-78-8) commercialisé par la société BASF sous la marque Irganox MD 1024^{®}.

### Méthode de préparation des compositions bitumineuses

La base bitume **(B₀)** est introduite dans un réacteur maintenu à 160°C sous agitation à 300 tours/min pendant deux heures. On introduit ensuite dans le réacteur les différents additifs. Le contenu du réacteur est maintenu à 160°C sous agitation à 300 tours/min pendant 1 heure.

### Méthode de préparation d'un pain bitumineux

Une masse d'environ 0,5 Kg de la composition bitumineuse chauffée à 160°C est coulée dans un moule rectangulaire en acier couvert d'un film thermofusible en polyéthylène. Le moule est ensuite refroidi à température ambiante puis démoulé.

### Protocole de mesure de la force maximale (Fₘₐₓ)

Cet essai est mis en œuvreafin d'évaluer la résistance à la compression d'une composition bitumineuse soumise à une charge à vitesse constante imposée et à une température de 50°C.

La mesure de la force maximale (Fₘₐₓ) est réalisée à l'aide d'un analyseur de texture commercialisé sous le nom LF Plus par la société LLOYD Instruments et équipé d'une enceinte thermique. Pour ce faire, on place une boîte métallique et cylindrique contenant une masse de 60 g de la composition bitumineuse à analyser à l'intérieur de l'enceinte thermique réglée à une température de 50°C. Le piston de l'analyseur de texture est un cylindre de diamètre égal à 25 mm et de hauteur 60 mm. Le piston cylindrique est au départ placé au contact de la surface supérieure de la composition bitumineuse. Ensuite, il se déplace verticalement vers le bas, à une vitesse constante de 1 mm/min, sur une distance calibrée de 10 mm de manière à exercer une force de compression sur la surface supérieure de la composition bitumineuse. L'analyseur de texture mesure la force maximale de compression appliquée par le piston sur la composition bitumineuse à 50°C.

La mesure de la force maximale de compression permet d'évaluer la capacité de la composition bitumineuse à résister à la déformation. Plus la valeur de la force maximale est importante, meilleure sera la résistance à la déformation d'un pain bitumineux obtenu à partir de cette composition bitumineuse.

### Résultats

### 1. Préparation des différentes compositions

Les compositions **C₁** à **C₈** correspondant aux mélanges détaillés dans le tableau 2 suivant sont préparées selon le protocole décrit précédemment.

Les compositions **C₁** à **C₆** sont comparatives.

Les compositions **C₇** et **C₈** sont selon l'invention.

**Tableau 2**

| | 1 **additif** | | | **2 additifs** | | | **3 additifs** | |
|---|---|---|---|---|---|---|---|---|
| | **C₁** | **C₂** | **C₃** | **C₄** | **C₅** | **C₆** | **C₇** | **C₈** |
| **B₀** (%) | 98,5 | 97,5 | 99,25 | 96,0 | 95,3 | 95,3 | 96,2 | 96,0 |
| **A₁** (%) | 1,5 | - | - | 1,5 | - | 4,0 | 1,2 | 1,5 |
| **A₂** (%) | - | 2,5 | - | 2,5 | 4,0 | - | 2,0 | 1,6 |
| **A₃** (%) | - | - | 0,75 | - | 0,7 | 0,7 | 0,6 | 1,9 |
| **A₁+A₂**+ **A₃** (%) | 1,5 | 2,5 | 0,75 | 4 | 4,7 | 4,7 | 3,8 | 5 |

### 2. Propriétés rhéologiques et mécaniques des compositions C₁ à C₈

Les propriétés mécaniques et rhéologiques des compositions **C₁** à **C₈** préparées ci-dessus ont été mesurées selon les protocoles définis ci-dessus.

Les résultats de ces mesures sont donnés dans le tableau 3 ci-dessous.

**Tableau 3**

| | **B₀** | **C₁** | **C₂** | **C₃** | **C₄** | **C₅** | **C₆** | **C₇** | **C₈** |
|---|---|---|---|---|---|---|---|---|---|
| **P₂₅** (1/10 mm) | 44 | 26 | 35 | 35 | 20 | 28 | 23 | 20 | 17 |
| **TBA** (°C) | 51,6 | 106, 5 | 86,5 | 102, 0 | 106, 0 | 103, 5 | 99,5 | 105, 5 | 96,5 |
| **Fmax** (N) | 0,9 | 23,6 | 2,98 | 75 | 83 | 78,9 | 85,7 | 192 | 310 |

### Pénétrabilité à 25°C (P₂₅)

Les compositions **C₇** et **C₈** selon l'invention présentent des valeurs de pénétrabilité réduites par rapport à celles des compositions **C₁** à **C₃** comprenant un unique additif **A₁**, **A₂** ou **A₃**.

Les compositions **C₇** et **C₈** selon l'invention présentent par ailleurs des valeurs de pénétrabilité similaires ou réduites par rapport à celles des compositions **C₄** à **C₆** comprenant l'association de deux additifs **A₁** et/ou **A₂** et/ou **A₃**.

Les compositions bitumineuses selon l'invention présentent donc une pénétrabilité similaire ou réduite, par rapport à celle de compositions comprenant uniquement un ou deux additifs choisis parmi **A₁**, **A₂** et **A₃**.

### Température de ramollissement bille et anneau (TBA)

Les compositions **C₁** à **C₈** présentent une température de ramollissement bille et anneau similaire.

### Force maximale (Fₘₐₓ)

Parmi les compositions **C₁** à **C₆**, la valeur la plus haute de force maximale est atteinte par la composition **C₆** avec 85,7 N.

La composition **C₇** selon l'invention présente une force maximale égale à 192 N, soit de plus de 2 fois supérieure à celle de la composition **C₆**.

La composition **C₈** selon l'invention présente une force maximale égale à 310 N, soit de plus de 3,5 fois supérieure à celle de la composition **C₆**.

Les compositions selon l'invention présentent donc une force maximale nettement supérieure à celle des compositions **C₁** à **C₆**.

La force maximale élevée des compositions selon l'invention témoigne d'une résistance à la déformation améliorée des compositions selon l'invention par rapport aux compositions de l'art antérieur **C₁** à **C₆**.

Mises sous la forme de pains, les compositions **C₇** et **C₈** selon l'invention sont stables au stockage et présentent notamment une résistance au fluage améliorée par rapport aux compositions **C₁** à **C₆**.

## Revendications

1. Composition bitumineuse comprenant au moins :
a) du bitume,
b) un composé de formule générale (I) :
R₁-(COOH)_{z} (I)
dans laquelle R₁ représente une chaîne hydrocarbonée linéaire ou ramifiée, comprenant de 4 à 68 atomes de carbone, et z est un entier variant de 2 à 4.
c) un composé de formule générale (II) :
R₂-(NH)ₙCONH-X-(NHCO)ₚ(NH)ₙ-R₃ (II)
dans laquelle :
- les groupements R₂ et R₃, identiques ou différents, représentent une chaîne hydrocarbonée comprenant de 1 à 22 atomes de carbone, et comprenant éventuellement des hétéroatomes tels que N, O, S, et R₃ peut être H,
- le groupement X représente une chaîne hydrocarbonée comprenant de 1 à 22 atomes de carbone, éventuellement substituée, et comprenant éventuellement des hétéroatomes, tels que N, O, S,
- n et p sont des entiers ayant une valeur de 0 ou 1 indépendamment l'un de l'autre.
d) un composé de formule générale (III) :
Arl-R-Ar2 (III)
dans laquelle :
- Ar1 et Ar2 représentent indépendamment l'un de l'autre un groupement aromatique comprenant de 6 à 20 atomes de carbone choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
- R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride.

2. Composition bitumineuse selon la revendication 1, dans laquelle le composé de formule (I) est choisi parmi les diacides de formule générale (IA) :
HOOC-C_{w}H_{2w}-COOH (IA)
avec w un entier allant de 4 à 22, de préférence de 4 à 12.

3. Composition bitumineuse selon la revendication 1 ou selon la revendication 2, dans laquelle le composé de formule générale (II) est choisi parmi les composés de formule générale (IIA) :
R₂-CONH-X-NHCO-R₃ (IIA)
dans laquelle R₂, R₃ et X sont tels que définis à la revendication 1.

4. Composition bitumineuse selon l'une quelconque des revendications précédentes, dans laquelle le composé de formule générale (III) est le 2',3-bis[(3-[3, 5-di-*tert*-butyl-4-hydroxyphenyl]propionyl)]propionohydrazide.

5. Composition bitumineuse selon l'une quelconque des revendications précédentes comprenant de 0,1% à 10% en masse d'un ou de plusieurs composés de formule (I), plus préférentiellement de 0,5% à 6% en masse, plus préférentiellement de 0,5% à 5% en masse encore plus préférentiellement de 0,5% à 2,5% en masse, par rapport à la masse totale de la composition bitumineuse.

6. Composition bitumineuse selon l'une quelconque des revendications précédentes comprenant de 0,1% à 10% en masse d'un ou de plusieurs composés de formule (II), plus préférentiellement de 0,5% à 6% en masse, plus préférentiellement de 0,5% à 5% en masse encore plus préférentiellement de 0,5% à 3,5% en masse, par rapport à la masse totale de la composition bitumineuse.

7. Composition bitumineuse selon l'une quelconque des revendications précédentes comprenant de 0,1% à 10% en masse d'un ou de plusieurs composés de formule (III), plus préférentiellement de 0,5% à 6% en masse, plus préférentiellement de 0,5% à 5% en masse encore plus préférentiellement de 0,5% à 3% en masse, par rapport à la masse totale de la composition bitumineuse.

8. Composition bitumineuse selon l'une quelconque des revendications précédentes sous forme solide et divisée à température ambiante, de préférence sous la forme de pains.

9. Procédé de préparation d'une composition bitumineuse selon l'une quelconque des revendications 1 à 8, comprenant la mise en contact du bitume et des composés de formule (I), (II) et (III) à une température allant de 70°C à 220°C, suivi éventuellement de la mise en forme de la composition bitumineuse obtenue sous forme divisée, de préférence sous la forme de pains.

10. Composition bitumineuse selon l'une quelconque des revendications 1 à 8, susceptible d'être obtenue par le procédé selon la revendication 9.

11. Utilisation d'une composition bitumineuse selon l'une quelconque des revendications 1 à 8 ou 10 comme liant routier, de préférence pour la fabrication d'enrobés.

12. Procédé de fabrication d'enrobés comprenant au moins un liant routier et des granulats ou des agrégats d'enrobés bitumineux recyclés, ledit liant routier étant sous la forme d'une composition bitumineuse selon l'une quelconque des revendications à 1 à 8 ou 10, ce procédé comprenant au moins les étapes de :
- chauffage des granulats ou des agrégats à une température allant de 100°C à 180°C, de préférence de 120°C à 180°C,
- mélange des granulats ou des agrégats avec le liant routier dans une cuve telle qu'un malaxeur ou un tambour malaxeur,
- obtention d'enrobés.

13. Procédé selon la revendication 12 qui ne comporte pas d'étape de chauffage du liant routier avant son mélange avec les granulats ou les agrégats.

14. Utilisation d'une composition bitumineuse selon l'une quelconque des revendications 1 à 8 ou 10 pour la préparation d'un revêtement d'étanchéité, d'une membrane ou d'une couche d'imprégnation.

15. Procédé de transport et/ou de stockage et/ou de manipulation de bitume, ledit bitume étant transportée et/ou stockée et/ou manipulée à température ambiante sous la forme d'une composition bitumineuse selon l'une quelconque des revendications 1 à 8 ou 10, de préférence sous forme solide et divisée selon la revendication 8.

## Patentansprüche

1. Bitumenzusammensetzung, die mindestens Folgendes umfasst:
a) Bitumen,
b) eine Verbindung der allgemeinen Formel (I):
R₁-(COOH)_{z} (I) ,
wobei R₁ eine lineare oder verzweigte Kohlenwasserstoffkette darstellt, die 4 bis 68 Kohlenstoffatome umfasst, und z eine ganze Zahl von 2 bis 4 ist,
c) eine Verbindung der allgemeinen Formel (II):
R₂-(NH)ₙCONH-X-(NHCO)ₚ(NH)ₙ-R₃ (II),
wobei:
- die Gruppen R₂ und R₃, die gleich oder verschieden sind, eine Kohlenwasserstoffkette darstellen, die 1 bis 22 Kohlenstoffatome umfasst und gegebenenfalls Heteroatome wie N, O, S umfasst, und R₃ H sein kann,
- die Gruppe X eine gegebenenfalls substituierte Kohlenwasserstoffgruppe darstellt, die 1 bis 22 Kohlenstoffatome umfasst und gegebenenfalls Heteroatome wie N, O, S umfasst,
- n und p ganze Zahlen sind, die unabhängig voneinander einen Wert von 0 oder 1 aufweisen,
d) eine Verbindung der allgemeinen Formel (III):
Ar1-R-Ar2 (III),
wobei:
Ar1 und Ar2 unabhängig voneinander eine 6 bis 20 Kohlenstoffatome umfassende aromatische Gruppe darstellen, die aus einem Benzolkern oder einem System von kondensierten aromatischen Kernen ausgewählt ist, wobei die aromatische Gruppe durch mindestens eine Hydroxylgruppe und gegebenenfalls durch eine oder mehrere C₁-C₂₀-Alkylgruppen substituiert ist, und
- R einen gegebenenfalls substituierten zweiwertigen Kohlenwasserstoffrest darstellt, dessen Hauptkette 6 bis 20 Kohlenstoffatome und mindestens eine Gruppe umfasst, die aus den Amid-, Ester-, Hydrazid-, Harnstoff-, Carbamat-, Anhydridfunktionen ausgewählt ist.

2. Bitumenzusammensetzung nach Anspruch 1, wobei die Verbindung der Formel (I) aus den zweibasigen Säuren der allgemeinen Formel (IA):
HOOC-C_{w}H_{2w}-COOH (IA)
ausgewählt ist, wobei w eine ganze Zahl von 4 bis 22, vorzugsweise von 4 bis 12, ist.

3. Bitumenzusammensetzung nach Anspruch 1 oder nach Anspruch 2, wobei die Verbindung der allgemeinen Formel (II) aus den Verbindungen der allgemeinen Formel (IIA):
R₂-CONH-X-NHCO-R₃ (IIA)
ausgewählt ist, wobei R₂, R₃ und X wie in Anspruch 1 definiert sind.

4. Bitumenzusammensetzung nach einem der vorhergehenden Ansprüche, wobei die Verbindung der allgemeinen Formel *(III)* 2',3-Bis[(3-[3,5-di-tert-butyl-4-hydroxyphenyl]propionyl)]propionohydrazid ist.

5. Bitumenzusammensetzung nach einem der vorhergehenden Ansprüche, die 0,1 Gew.-% bis 10 Gew.-% einer oder mehrerer Verbindungen der Formel (I), bevorzugter 0,5 Gew.-% bis 6 Gew.-%, bevorzugter 0,5 Gew.-% bis 5 Gew.-%, noch bevorzugter 0,5 Gew.-% bis 2,5 Gew.-%, bezogen auf die Gesamtmasse der Bitumenzusammensetzung, umfasst.

6. Bitumenzusammensetzung nach einem der vorhergehenden Ansprüche, die 0,1 Gew.-% bis 10 Gew.-% einer oder mehrerer Verbindungen der Formel (II), bevorzugter 0,5 Gew.-% bis 6 Gew.-%, bevorzugter 0,5 Gew.-% bis 5 Gew.-%, noch bevorzugter 0,5 Gew.-% bis 3,5 Gew.-%, bezogen auf die Gesamtmasse der Bitumenzusammensetzung, umfasst.

7. Bitumenzusammensetzung nach einem der vorhergehenden Ansprüche, die 0,1 Gew.-% bis 10 Gew.-% einer oder mehrerer Verbindungen der Formel (III), bevorzugter 0,5 Gew.-% bis 6 Gew.-%, bevorzugter 0,5 Gew.-% bis 5 Gew.-%, noch bevorzugter 0,5 Gew.-% bis 3 Gew.-%, bezogen auf die Gesamtmasse der Bitumenzusammensetzung, umfasst.

8. Bitumenzusammensetzung nach einem der vorhergehenden Ansprüche in fester Form und bei Umgebungstemperatur zerteilt, vorzugsweise in Form von Blöcken.

9. Verfahren zur Herstellung einer Bitumenzusammensetzung nach einem der Ansprüche 1 bis 8, welches das In-Kontakt-Bringen des Bitumens und der Verbindungen der Formel (I), (II) und *(III)* bei einer Temperatur von 70 °C bis 220 °C gegebenenfalls gefolgt vom Formen der in zerteilter Form erhaltenen Bitumenzusammensetzung, vorzugsweise in Form von Blöcken, umfasst.

10. Bitumenzusammensetzung nach einem der Ansprüche 1 bis 8, die durch das Verfahren nach Anspruch 9 erhältlich ist.

11. Verwendung einer Bitumenzusammensetzung nach einem der Ansprüche 1 bis 8 oder 10 als Straßenbaubindemittel, vorzugsweise zur Herstellung von bituminösem Schwarzmaterial.

12. Verfahren zur Herstellung von bituminösem Schwarzmaterial, das mindestens ein Straßenbaubindemittel und recycelte bitumöse Schwarzmaterialgranulate oder -aggregate umfasst, wobei das Straßenbaubindemittel in Form einer Bitumenzusammensetzung nach einem der Ansprüche 1 bis 8 oder 10 vorliegt, wobei dieses Verfahren zumindest die folgenden Schritte umfasst:
- das Erwärmen der Granulate oder Aggregate auf eine Temperatur von 100 °C bis 180 °C, vorzugsweise von 120 °C bis 180 °C,
- das Mischen der Granulate oder Aggregate mit dem Straßenbaubindemittel in einem Behälter wie einem Mischer oder einer Mischtrommel,
- den Erhalt von bituminösem Schwarzmaterial.

13. Verfahren nach Anspruch 12, das den Schritt des Erwärmens des Straßenbaubindemittels vor dessen Vermischen mit den Granulaten oder den Aggregaten nicht umfasst.

14. Verwendung einer Bitumenzusammensetzung nach einem der Ansprüche 1 bis 8 oder 10 zur Herstellung einer Abdichtungsbeschichtung, einer Membran oder einer Imprägnierungsschicht.

15. Verfahren zum Transportieren und/oder Lagern und/oder zur Handhabung von Bitumen, wobei das Bitumen bei Umgebungstemperatur in Form einer Bitumenzusammensetzung nach einem der Ansprüche 1 bis 8 oder 10, vorzugsweise in fester und zerteilter Form nach Anspruch 8, transportiert und/oder gelagert und/oder gehandhabt wird.

## Claims

1. A bituminous composition comprising at least:
a) bitumen,
b) a compound of general formula (I):
R₁-(COOH)_{z} (I)
in which R₁ represents a linear or branched hydrocarbon chain, comprising from 4 to 68 carbon atoms, and z is an integer ranging from 2 to 4,
c) a compound of general formula (II):
R₂-(NH)ₙCONH-X-(NHCO)ₚ(NH)ₙ-R₃ (II)
in which:
- the R₂ and R₃ groups, which may be identical or different, represent a hydrocarbon chain comprising from 1 to 22 carbon atoms and optionally comprising heteroatoms such as N, O, S, and R₃ may be H,
- the group X represents an optionally substituted hydrocarbon chain comprising from 1 to 22 carbon atoms and optionally comprising heteroatoms such as N, O, S,
- n and p are integers having a value of 0 or 1 independently of one another,
d) a compound of general formula (III):
Ar1-R-Ar2 (III)
in which:
- Ar1 and Ar2 represent, independently of one another, an aromatic group comprising from 6 to 20 carbon atoms chosen from a benzene ring or a system of fused aromatic rings, said aromatic group being substituted by at least one hydroxyl group and optionally by one or more C₁-C₂₀ alkyl groups, and
- R represents an optionally substituted divalent hydrocarbon radical, the main chain of which comprises from 6 to 20 carbon atoms and at least one group chosen from amide, ester, hydrazide, urea, carbamate and anhydride functions.

2. The bituminous composition as claimed in claim 1, wherein the compound of formula (I) is chosen from diacids of general formula (IA):
HOOC-C_{w}H_{2w}-COOH (IA)
with w an integer ranging from 4 to 22, preferably from 4 to 12.

3. The bituminous composition as claimed in claim 1 or as claimed in claim 2, wherein the compound of general formula (II) is chosen from compounds of general formula (IIA):
R₂-CONH-X-NHCO-R₃ (IIA)
in which R₂, R₃ and X are as defined in claim 1.

4. The bituminous composition as claimed in any one of the preceding claims, in which the compound of general formula (III) is 2',3-bis[(3-[3,5-di-*tert*-butyl-4-hydroxyphenyl]propionyl)]propionohydrazide.

5. The bituminous composition as claimed in any one of the preceding claims, comprising from 0.1% to 10% by mass of one or more compounds of formula (I), more preferentially from 0.5% to 6% by mass, more preferentially from 0.5% to 5% by mass, and even more preferentially from 0.5% to 2.5% by mass, relative to the total mass of the bituminous composition.

6. The bituminous composition as claimed in any one of the preceding claims, comprising from 0.1% to 10% by mass of one or more compounds of formula (II), more preferentially from 0.5% to 6% by mass, more preferentially from 0.5% to 5% by mass, and even more preferentially from 0.5% to 3.5% by mass, relative to the total mass of the bituminous composition.

7. The bituminous composition as claimed in any one of the preceding claims, comprising from 0.1% to 10% by mass of one or more compounds of formula (III), more preferentially from 0.5% to 6% by mass, more preferentially from 0.5% to 5% by mass, and even more preferentially from 0.5% to 3% by mass, relative to the total mass of the bituminous composition.

8. The bituminous composition as claimed in any one of the preceding claims, in solid and divided form at ambient temperature, preferably in the form of blocks.

9. A method for preparing a bituminous composition as claimed in any one of claims 1 to 8, comprising bringing the bitumen and the compounds of formulae (I), (II) and (III) into contact at a temperature ranging from 70°C to 220°C, optionally followed by forming the bituminous composition obtained into divided form, preferably in the form of blocks.

10. The bituminous composition as claimed in any one of claims 1 to 8, capable of being obtained by the method as claimed in claim 9.

11. The use of a bituminous composition as claimed in any one of claims 1 to 8 or 10 as road binder, preferably for the manufacture of bituminous mixes.

12. A method for manufacturing bituminous mixes comprising at least one road binder and aggregates or recycled bituminous mix aggregates, said road binder being in the form of a bituminous composition as claimed in any one of claims 1 to 8 or 10, this method comprising at least the steps of:
- heating the aggregates to a temperature ranging from 100°C to 180°C, preferably from 120°C to 180°C,
- mixing the aggregates with the road binder in a vessel such as a mixer or a drum mixer,
- obtaining bituminous mixes.

13. The method as claimed in claim 12, which does not comprise a step of heating the road binder before it is mixed with the aggregates.

14. The use of a bituminous composition as claimed in any one of claims 1 to 8 or 10 for preparing a leaktight coating, a membrane or a seal coat.

15. A method for transporting and/or storing and/or handling bitumen, said bitumen being transported and/or stored and/or handled at ambient temperature in the form of a bituminous composition as claimed in any one of claims 1 to 8 or 10, preferably in solid and divided form as claimed in claim 8.
